# EUROPEAN PATENT APPLICATION

(11) **EP 4 618 668 A1**
(43) Date of publication of application: **17.09.2025**
(21) Application number: 23899817.3
(22) Date of filing: 27.11.2023
(51) Int. Cl.: H04W 72/0453

(54) **COMMUNICATION METHOD, SYSTEM, AND APPARATUS**

(30) Priority: 09.12.2022 CN 202211585182
(71) Applicant: Huawei Technologies Co., Ltd., Shenzhen, Guangdong 518129 (CN)
(72) Inventor: LI, Shuai, Shenzhen, Guangdong 518129 (CN); WU, Yiling, Shenzhen, Guangdong 518129 (CN)
(74) Representative: Pfenning, Meinig & Partner mbB
(86) International application number: PCT/CN2023/134367
(87) International publication number: WO 2024/120238

(57) **Abstract**

Embodiments of this application provide a communication method and system, and an apparatus, to improve energy charging efficiency. The method includes: At least two active devices send excitation signals to a passive device in a first time period, where the at least two active devices include a first active device and a second active device, and the excitation signals are used to charge energy for the passive device. That at least two active devices send excitation signals to a passive device in a first time period includes: The first active device sends a first excitation signal to the passive device in the first time period; and the second active device sends a second excitation signal to the passive device in the first time period, where a first frequency configuration corresponding to the first excitation signal is different from a second frequency configuration corresponding to the second excitation signal.

## Description

### TECHNICAL FIELD

This application relates to the field of communication technologies, and more specifically, to a communication method and system, and an apparatus related to device energy charging.

### BACKGROUND

Internet of things (internet of things, IoT) devices include an active device and a passive device. The passive device usually performs energy charging by using an electromagnetic wave signal from the active device. Currently, energy charging efficiency of the passive device is low, and how to improve the efficiency of charging energy for the passive device is an important issue to be further studied.

### SUMMARY

This application provides a communication method and system, an apparatus, and the like, to charge energy for a passive device, so that efficiency of charging energy for the passive device can be improved.

According to a first aspect, a communication method is provided, including: At least two active devices send excitation signals to a passive device in a first time period, where the at least two active devices include a first active device and a second active device, and the excitation signals are used to charge energy for the passive device. That at least two active devices send excitation signals to a passive device in a first time period includes: The first active device sends a first excitation signal to the passive device in the first time period; and the second active device sends a second excitation signal to the passive device in the first time period, where a first frequency configuration corresponding to the first excitation signal is different from a second frequency configuration corresponding to the second excitation signal.

Based on the foregoing solution, the at least two active devices may simultaneously send excitation signals corresponding to different frequency configurations to the passive device, so that a possibility of power cancellation between different excitation signals when the different excitation signals arrive at the passive device can be reduced, and energy charging efficiency can be improved.

With reference to the first aspect, in some implementations of the first aspect, before the at least two active devices send the excitation signals to the passive device in the first time period, the method further includes: The at least two active devices receive a first indication message from a centralized control device, where the first indication message indicates the at least two active devices to send the excitation signals to the passive device in the first time period. In some other implementations, before the at least two active devices send the excitation signals to the passive device in the first time period, the method further includes: The at least two active devices receive a second indication message from the centralized control device, where the second indication message includes a frequency configuration corresponding to the excitation signal. The centralized control device may implement unified scheduling on a plurality of active devices by using the indication message, and the active device that accepts the unified scheduling performed by the centralized control device does not need to preconfigure time or frequency related information.

With reference to the first aspect, in some implementations of the first aspect, the second indication message further includes identification information, and the identification information indicates an active device to which the frequency configuration is available. In a scenario in which a plurality of active devices are included, the centralized control device may send frequency configurations of different active devices to a plurality of active devices by using one indication message, and each active device may determine an available frequency configuration of the active device based on a correspondence between identification information in the indication message and a frequency configuration, to improve information transfer efficiency of the centralized control device.

According to a second aspect, a communication system is provided, including a first active device and a second active device. The first active device is configured to send, to a passive device in a first time period, a first excitation signal used to charge energy for the passive device; and the second active device is configured to send, to the passive device in the first time period, a second excitation signal used to charge energy for the passive device, where a first frequency configuration corresponding to the first excitation signal is different from a second frequency configuration corresponding to the second excitation signal.

Based on the foregoing solution, the at least two active devices may simultaneously send excitation signals corresponding to different frequency configurations to the passive device, so that a possibility of power cancellation between different excitation signals can be reduced, power of a signal received by the passive device can be increased, and energy charging efficiency can be improved.

With reference to the second aspect, in some implementations of the second aspect, the system further includes the passive device, configured to receive the first excitation signal and the second excitation signal, so that the passive device can obtain energy from the excitation signals to implement energy charging.

With reference to the second aspect, in some implementations of the second aspect, the first active device and the second active device are further configured to receive one or more of the following: a first indication message, where the first indication message indicates the first active device and the second active device to send the excitation signals to the passive device in the first time period; and a second indication message, where the second indication message includes the frequency configurations corresponding to the excitation signals.

With reference to the second aspect, in some implementations of the second aspect, the system further includes a centralized control device. The centralized control device is configured to send the first indication message or the second indication message to the first active device and the second active device. The centralized control device may implement unified scheduling on a plurality of active devices by using the indication message, and the active device that accepts the unified scheduling performed by the centralized control device does not need to preconfigure time or frequency related information.

According to a third aspect, a communication method is provided, including: An active device sends an excitation signal to a passive device in a first time period, where the excitation signal is used to charge energy for the passive device. Optionally, the active device receives a first indication message from a centralized control device, where the first indication message indicates the active device to send the excitation signal to the passive device in the first time period. Optionally, the active device receives a second indication message from the centralized control device, where the second indication message includes one or more parameters in a frequency configuration corresponding to the excitation signal.

According to a fourth aspect, a communication method is provided, including: A centralized control device sends a first indication message and/or a second indication message to one or more active devices, where the first indication message indicates the one or more active devices to send an excitation signal to a passive device in a first time period, and the second indication message includes one or more parameters in a frequency configuration corresponding to the excitation signal.

According to a fifth aspect, an apparatus is further provided, and a module included in the apparatus is configured to implement the method provided in the third aspect or the fourth aspect.

According to a sixth aspect, an apparatus is further provided, including a processor and a memory. The memory is configured to store instructions, and the processor is configured to execute the instructions to perform the method provided in the third aspect or the fourth aspect.

According to a seventh aspect, a computer-readable storage medium is further provided. The computer-readable storage medium stores instructions, and when the instructions are run on a computer, the computer is enabled to perform the method provided in the third aspect or the fourth aspect.

According to an eighth aspect, a computer program product including instructions is further provided. When the instructions are run on a computer, the computer is enabled to perform the method provided in the third aspect or the fourth aspect.

With reference to the foregoing aspects and implementations, in some implementations, that a first frequency configuration corresponding to the first excitation signal is different from a second frequency configuration corresponding to the second excitation signal includes: One or more parameters in the first frequency configuration are different from one or more parameters in the second frequency configuration.

With reference to the foregoing aspects and implementations, in some implementations, the one or more parameters in the first frequency configuration include a first frequency value, and the first excitation signal is a monophonic signal whose frequency is the first frequency value. The one or more parameters in the second frequency configuration include a second frequency value, and the second excitation signal is a monophonic signal whose frequency is the second frequency value. The first frequency value is different from the second frequency value. Different excitation signals are superimposed when arriving at a passive device. A signal obtained through superimposition has a spindle-shaped envelope in time domain, and a PAPR is high, so that energy charging efficiency is improved.

With reference to the foregoing aspects and implementations, in some implementations, the one or more parameters in the first frequency configuration include a first frequency value, and the first excitation signal is a monophonic signal whose frequency is the first frequency value. The one or more parameters in the second frequency configuration include a modulation order, a modulation symbol sequence, a modulation rate, and a frequency group including a plurality of frequency values, and the second excitation signal is a frequency shift keying FSK signal corresponding to the modulation order, the modulation symbol sequence, the modulation rate, and the frequency group in the second frequency configuration. The FSK signal has a strong anti-interference capability, and this helps ensure power of the signal received by the passive device, to improve the energy charging efficiency.

With reference to the foregoing aspects and implementations, in some implementations, the one or more parameters in the first frequency configuration include a modulation order, a modulation symbol sequence, a modulation rate, and a frequency group including a plurality of frequency values, and the first excitation signal is a frequency shift keying FSK signal corresponding to the modulation order, the modulation symbol sequence, the modulation rate, and the frequency group in the first frequency configuration. The one or more parameters in the second frequency configuration include a modulation order, a modulation symbol sequence, a modulation rate, and a frequency group including a plurality of frequency values, and the second excitation signal is an FSK signal corresponding to the modulation order, the modulation symbol sequence, the modulation rate, and the frequency group in the second frequency configuration. The modulation order, the modulation symbol sequence, the modulation rate, or the frequency group in the first frequency configuration is different from the modulation order, the modulation symbol sequence, the modulation rate, or the frequency group in the second frequency configuration. That the frequency group in the first frequency configuration is different from the frequency group in the second frequency configuration includes: At least one of the plurality of frequency values included in the frequency group in the first frequency configuration is different from the plurality of frequency values included in the frequency group in the second frequency configuration. The two excitation signals are both FSK signals having a strong anti-interference capability, so that the power of the signal received by the passive device can be further ensured, to improve the energy charging efficiency.

With reference to the foregoing aspects and implementations, in some implementations, the one or more parameters in the first frequency configuration include a first frequency value, and the first excitation signal is a monophonic signal whose frequency is the first frequency value. The one or more parameters in the second frequency configuration include a plurality of frequency values, and the second excitation signal is a multi-tone signal corresponding to the plurality of frequency values in the second frequency configuration. Optionally, the plurality of frequency values in the second frequency configuration are different from the first frequency value. When two active devices respectively send a monophonic signal and a multi-tone signal, a PAPR of the signal received by the passive device is high, and the passive device obtains more energy.

With reference to the foregoing aspects and implementations, in some implementations, the one or more parameters in the first frequency configuration include a modulation order, a modulation symbol sequence, a modulation rate, and a frequency group including a plurality of frequency values, and the first excitation signal is a frequency shift keying FSK signal corresponding to the modulation order, the modulation symbol sequence, the modulation rate, and the frequency group in the first frequency configuration. The one or more parameters in the second frequency configuration include a plurality of frequency values, and the second excitation signal is a multi-tone signal corresponding to the plurality of frequency values in the second frequency configuration. Optionally, at least one of the plurality of frequency values included in the frequency group in the first frequency configuration is different from the plurality of frequency values in the second frequency configuration. A possibility of power cancellation between the FSK signal and the multi-tone signal is smaller, so that the power of the signal received by the passive device can be further ensured, and the efficiency of charging energy for the passive device can be improved.

With reference to the foregoing aspects and implementations, in some implementations, the one or more parameters in the first frequency configuration include a plurality of frequency values, and the first excitation signal is a multi-tone signal corresponding to the plurality of frequency values in the first frequency configuration. The one or more parameters in the second frequency configuration include a plurality of frequency values, and the second excitation signal is a multi-tone signal corresponding to the plurality of frequency values in the second frequency configuration. At least one of the plurality of frequency values in the first frequency configuration is different from the plurality of frequency values in the second frequency configuration. The excitation signals sent by the two active devices are both multi-tone signals. This can further improve the PAPR of the signal received by the passive device, and help improve the energy charging efficiency.

### BRIEF DESCRIPTION OF DRAWINGS

FIG. 1 is a diagram of a communication system according to an embodiment of this application;
FIG. 2 is a diagram of an integrated architecture to which an embodiment of this application is applied;
FIG. 3 is a diagram of a separated architecture to which an embodiment of this application is applied;
FIG. 4 is a diagram of another communication system according to an embodiment of this application;
FIG. 5 is a schematic flowchart of a communication method 500 according to an embodiment of this application;
FIG. 6 is a diagram of an excitation signal according to an embodiment of this application;
FIG. 7 is a diagram of sent signals and a received signal according to an embodiment of this application;
FIG. 8 is a diagram of another excitation signal according to an embodiment of this application;
FIG. 9 is another diagram of sent signals and a received signal according to an embodiment of this application;
FIG. 10 is a schematic flowchart of another communication method 1000 according to an embodiment of this application;
FIG. 11 is a diagram of active device grouping according to an embodiment of this application;
FIG. 12 is a diagram of still another communication method according to an embodiment of this application;
FIG. 13 is a block diagram of a communication apparatus 1300 according to an embodiment of this application;
FIG. 14 is a block diagram of another communication apparatus 1400 according to an embodiment of this application; and
FIG. 15 is a diagram of a chip system 1500 according to an embodiment of this application.

### DESCRIPTION OF EMBODIMENTS

The following describes technical solutions in this application with reference to the accompanying drawings.

Internet of things devices include an active device and a passive device. An energy supply manner of the active device is different from that of the passive device. The active device is supplied with energy by using a battery of the active device or a connected power supply, and the passive device usually needs to obtain energy from an electromagnetic wave signal in an environment to perform energy charging. For example, the passive device may perform energy charging by using an electromagnetic wave signal from the active device. The electromagnetic wave signal used to charge energy for the passive device may be referred to as an energy charging signal, and may also be referred to as an excitation signal. After receiving the excitation signal, the passive device converts power of the excitation signal into power that can be actually used for signal receiving, sending, and processing. Higher power of the signal received by the passive device indicates more energy obtained and higher energy charging efficiency. Whether the energy charging efficiency of the passive device can be improved is a key to implementing large-scale application of the passive device.

Embodiments of this application provide a communication method and system, and an apparatus, to improve the efficiency of charging energy for the passive device. Embodiments of this application may be applied to a plurality of communication systems, including but not limited to a radio frequency identification (radio frequency identification, RFID) system, a backscatter communication (backscatter communication) system, a passive internet of things (passive IoT) system, a long term evolution (long term evolution, LTE) system, a fifth generation (fifth generation, 5G) new radio (new radio, NR) system, an LTE and 5G hybrid networking system, a non-terrestrial network (non-terrestrial network, NTN) system, a device-to-device (device-to-device, D2D) communication system, a machine to machine (machine to machine, M2M) communication system, a wireless local area network (wireless local area network, WLAN), and the like. Embodiments of this application may be further applied to a future communication system, for example, a 6th generation (6th generation, 6G) mobile communication system.

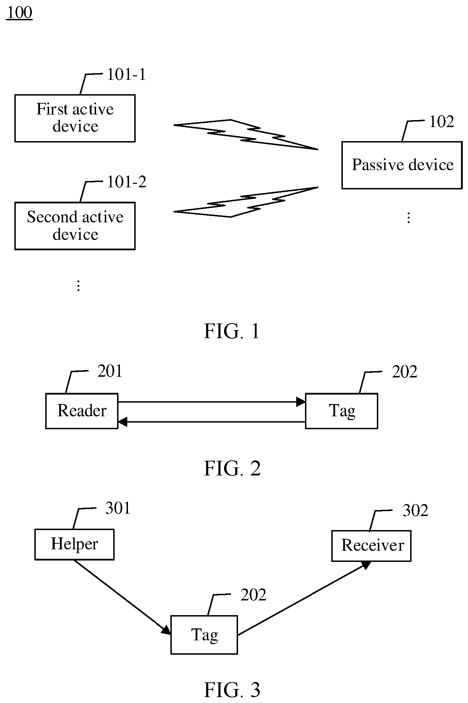

FIG. 1 is a diagram of a communication system 100 according to an embodiment of this application. The system includes at least two active devices, for example, a first active device 101-1 and a second active device 101-2. The active device may send an excitation signal to a passive device, to charge energy for the passive device. Optionally, the active device further sends downlink data to the passive device, or sends, to the passive device, a carrier signal used to carry uplink data.

There are a plurality of implementations of the active device. Optionally, the active device may be a network device. The network device is any network device that can perform wireless communication with a terminal device, or a chip or a chip system that can be disposed in the network device, and may be configured to implement functions such as a radio physical control function, resource scheduling and radio resource management, radio access control, or mobility management. The network device may be a device that supports wired access, or may be a device that supports wireless access. For example, the network device may be an access network (access network, AN)/radio access network (radio access network, RAN) device, and includes one or more AN/RAN nodes. The AN/RAN node may be a NodeB (NodeB, NB), a macro base station, a micro base station, a relay station, an enhanced NodeB (enhanced NodeB, eNB), a next generation NodeB (NR NodeB, gNB), a radio network controller (radio network controller, RNC), a base station controller (base station controller, BSC), a base transceiver station (base transceiver station, BTS), a home base station (for example, a home evolved NodeB, (home evolved NodeB) or a home NodeB (home NodeB, HNB)), a baseband unit (baseband unit, BBU), an access point (access point, AP), a wireless fidelity AP (wireless fidelity AP, Wi-Fi AP), a transmission reception point (transmission reception point, TRP), a transmission point (transmission point, TP), a wireless relay node, a wireless backhaul node (namely, an IAB node) in integrated access and backhaul (integrated access and backhaul, IAB), or another type of access node.

Optionally, the active device may alternatively be a terminal device. The terminal device may be a device having a wireless transceiver function, or a chip or a chip system that may be disposed in the terminal device, and may be referred to as user equipment (user equipment, UE), a terminal (terminal), a mobile station (mobile station, MS), a mobile terminal (mobile terminal, MT), or the like. For example, the terminal device may be a handheld device or a vehicle-mounted device having a wireless connection function, for example, a mobile phone (mobile phone), a tablet computer, a notebook computer, a palmtop computer, or a computer having a wireless transceiver function. The terminal device may alternatively be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited. The terminal device may alternatively be a reader, a read device, an exciter, a helper, or the like in an RFID system or a backscatter communication system.

Optionally, the communication system 100 further includes a passive device 102. The passive device may communicate with the active device. A direction from the active device to the passive device is referred to as downlink, and is also referred to as a forward direction. A direction from the passive device to the active device is referred to as uplink, and is also referred to as a backward direction. The passive device may receive the excitation signal from the active device, and obtain energy from the excitation signal to perform energy charging. Optionally, after obtaining the energy from the excitation signal, the passive device may directly use the energy for signal receiving and sending and/or processing. Alternatively, the passive device having an energy storage capability may first store the energy, and use the energy when needed subsequently. The passive device may further exchange data with the active device. For example, the passive device receives downlink data sent by the active device. For another example, the passive device receives a carrier signal sent by the active device, modulates uplink data on the carrier signal, and backscatters the uplink data to the active device. A manner in which the passive device transmits the uplink data may be referred to as backscatter communication.

The passive device 102 may be any terminal device that can obtain energy from a signal sent by the active device, or a chip or a chip system that can be disposed in the terminal device. For example, the passive device 102 may be a terminal device that does not generate a carrier signal, transmits uplink data through backscatter communication, and does not perform power amplification on a reflected signal. This type of terminal device usually does not include a battery, and may also be referred to as a battery-free device, a passive device, or the like. Alternatively, the passive device may be a terminal device that does not generate a carrier signal, transmits uplink data through backscatter communication, but can perform power amplification on a reflected signal. This type of terminal device usually has a specific energy storage capability. This type of device having a limited energy storage capability may also be referred to as a semi-passive device (semi-passive device) or a semi-active device, and is collectively referred to as a passive device in embodiments, systems, and scenarios of this application.

For example, the communication system 100 may be an RFID system. The RFID system is based on a non-contact automatic identification technology, may be configured to implement identity identification, and may also be configured to implement user data reading and writing. In the RFID system, the passive device 102 may be a tag, and the active device may be a reader (reader) in an integrated architecture, or may be a helper (helper) in a separated architecture. An integrated architecture shown in FIG. 2 is used as an example. A reader 201 sends an excitation signal to a tag 202 to provide energy for the tag 202, and the tag 202 receives the excitation signal sent by the reader 201 to perform energy charging. In addition, the reader 201 may send downlink data to the tag 202, and the tag 202 sends uplink data to the reader 201 by using a reflected signal. In this manner, the reader 201 may identify the tag 202, and perform operations such as reading and writing on the tag 202. The reader 201 may also be referred to as a reader device, a read device, a reading device, or the like.

A separated architecture shown in FIG. 3 includes a helper 301, a receiver (receiver) 302, and a tag 202. The helper is responsible for sending an excitation signal to the tag 202, and the receiver 302 is responsible for receiving a reflected signal from the tag 202. In addition, the receiver 302 may send data to the helper 301 directly or indirectly, and the helper 301 forwards the data to the tag 202. The helper 301 and the receiver 302 may be parts that are of a same reader and that are respectively responsible for a sending function and a receiving function, or may be of different readers. The helper 301 may also be referred to as an exciter, an excitation device, a radio frequency source, or the like.

For example, the communication system 100 may alternatively be a passive internet of things system. The passive internet of things system is a cellular internet of things communication system that supports the passive device, is oriented to a next-level internet of things market that is more sensitive to costs and power consumption of the terminal device, and is usually co-deployed with a cellular network. In the passive internet of things system, the passive device and the active device may be implemented in a plurality of manners. For example, the passive device may be an IoT device, for example, a passive tag, a semi-passive tag, or a backscatter terminal device. The active device may be a terminal device, for example, a reader, an exciter, or a mobile phone, or may be an AN/RAN device or node in a cellular network, for example, a base station, a macro base station, a micro base station, a relay station, an eNB, a gNB, or another access node. A passive internet of things may also be referred to as a passive internet of things, an ambient internet of things (ambient IoT), an ambient power-enabled internet of things (ambient power-enabled IoT), ambient backscattering communication (ambient backscattering communication), or the like.

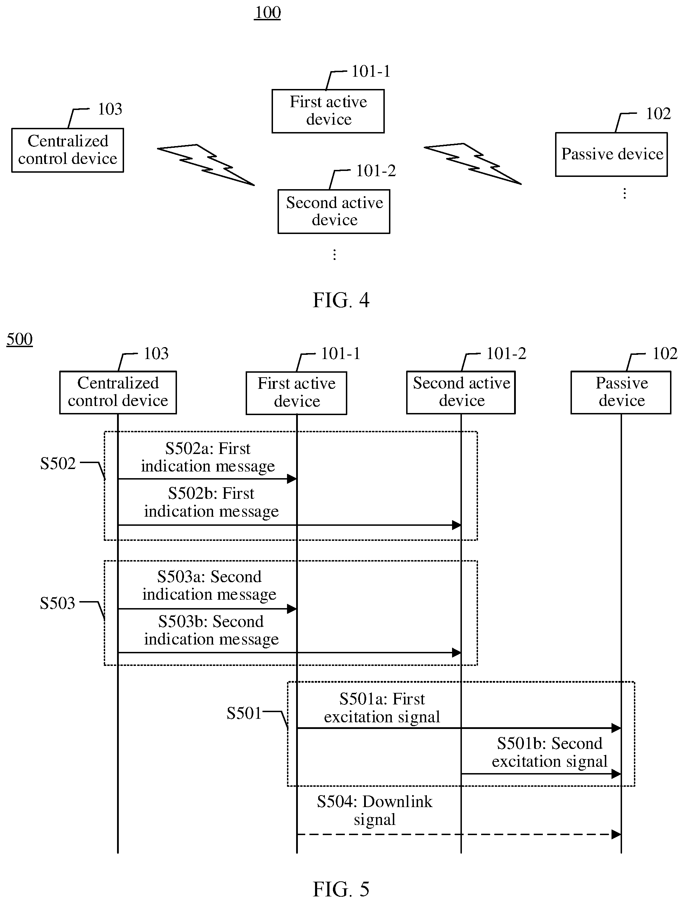

Optionally, as shown in FIG. 4, the communication system 100 may further include a centralized control device 103. The centralized control device 103 may control the active device by communicating with the active device. The centralized control device may directly communicate with the active device, or indirectly communicate with the active device through another device in the communication system. For example, the centralized control device may schedule a transmission resource used by the active device, and control signal receiving and sending behavior of the active device, or may exchange data with the passive device through the active device. A 5G NR technology or a 5G sidelink (sidelink, SL) technology may be used for communication between the centralized control device and the active device.

For an implementation of the centralized control device 103, refer to the examples of the foregoing network device or terminal device. Details are not described herein again. For example, in the passive internet of things system, the centralized control device may be a base station, a macro base station, a micro base station, an eNB, a gNB, or the like.

FIG. 5 is a schematic flowchart of a communication method 500 according to an embodiment of this application. The method may be applied to the foregoing communication system 100. The following describes the method 500 in detail by using an integrated architecture as an example. Similarly, the method is also applicable to a separated architecture. For example, an active device in the following descriptions is equivalent to a helper in the separated architecture. As shown in FIG. 5, the method includes the following plurality of steps.

S501: At least two active devices send excitation signals to a passive device in a first time period, where the excitation signal is used to charge energy for the passive device.

For example, the at least two active devices include a first active device 101-1 and a second active device 101-2. Step S501 may include the following steps S501a and S501b.

S501a: The first active device sends a first excitation signal to the passive device in the first time period, where the first excitation signal corresponds to a first frequency configuration.

S501b: The second active device sends a second excitation signal to the passive device in the first time period, where the second excitation signal corresponds to a second frequency configuration.

The first frequency configuration is different from the second frequency configuration. Based on this manner, the first active device and the second active device send excitation signals corresponding to different frequency configurations to the passive device, so that a possibility of power cancellation between different excitation signals can be reduced, power of a signal received by the passive device can be increased, and energy charging efficiency can be improved.

Optionally, the excitation signal is a constant envelope signal. The constant envelope signal is a signal whose amplitude remains unchanged, for example, a monophonic signal or a frequency shift keying (frequency shift keying, FSK) signal. The monophonic signal is a sine or cosine signal having a single frequency, and may also be referred to as a single-frequency signal. The FSK signal is a signal determined based on a modulation order, a modulation symbol sequence, a modulation rate, and a frequency group including a plurality of frequency values, where a quantity of frequency values included in the frequency group is equal to the modulation order.

A ratio of peak power to average power, namely, a peak-to-average power ratio (peak-to-average power ratio, PAPR), of the constant envelope signal is low, and the first active device and the second active device may send the excitation signals at high average power (for example, the peak power), to improve the efficiency of charging energy for the passive device.

Optionally, the excitation signal is a non-constant envelope signal, for example, a multi-tone signal. The multi-tone signal is a signal obtained by superimposing a plurality of sine or cosine signals of different frequencies. When average power is the same, a PAPR of the multi-tone signal is higher than a PAPR of the monophonic signal. In the following embodiments, an example of a multi-tone signal being a non-constant envelope signal is used for description.

Optionally, that the first frequency configuration is different from the second frequency configuration means that one or more parameters in the first frequency configuration are different from one or more parameters in the second frequency configuration. One of the following implementations 1.1 to 1.6 is used as an example.
(1) Both the first excitation signal and the second excitation signal are constant envelope signals. The following Manners 1.1 to 1.3 are used as examples.

**Manner 1.1:** The one or more parameters in the first frequency configuration include a first frequency value, and the first excitation signal is a monophonic signal whose frequency is the first frequency value. The one or more parameters in the second frequency configuration include a second frequency value, and the second excitation signal is a monophonic signal whose frequency is the second frequency value. The first frequency value is different from the second frequency value.

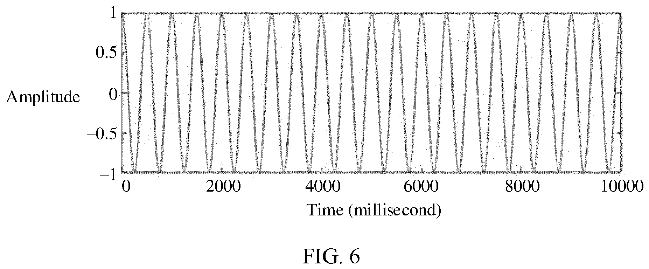

In this implementation, the first active device may determine, based on that the first frequency configuration includes the first frequency value, that the first excitation signal is a monophonic signal whose frequency is the first frequency value. For example, when the first frequency value is 1 hertz (Hz), the first active device may determine that the first excitation signal is a monophonic signal whose frequency is 1 Hz shown in FIG. 6. Similarly, the second active device determines, based on that the second frequency configuration includes the second frequency value, that the second excitation signal is the monophonic signal whose frequency is a second frequency value. The first frequency value is different from the second frequency value. In other words, the first active device and the second active device simultaneously send monophonic signals of different frequencies to the passive device.

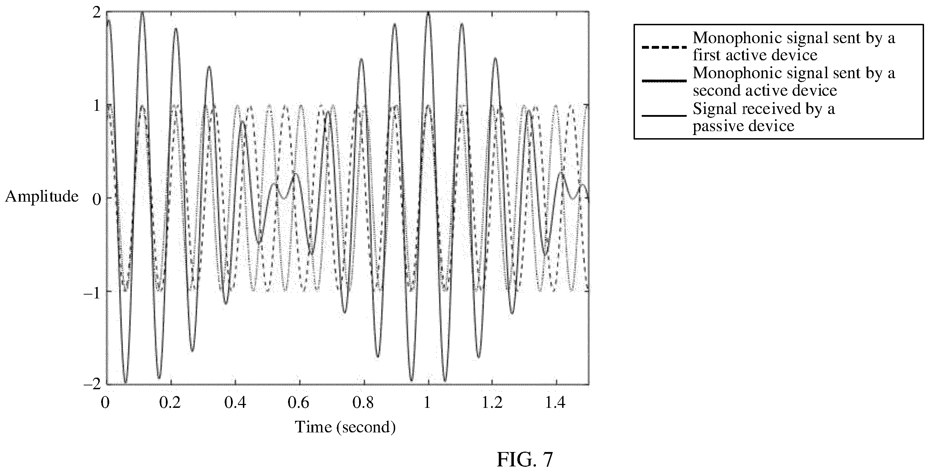

FIG. 7 shows monophonic signals respectively sent by the first active device and the second active device to the passive device and a signal received by the passive device when the first frequency value is 1 Hz and the second frequency value is 2 Hz. It can be learned that the monophonic signals of different frequency values are superimposed when arriving at the passive device. A signal obtained through superimposition has a spindle-shaped envelope in time domain, and a PAPR is high, so that the energy charging efficiency is improved.

**Manner** 1.2: The one or more parameters in the first frequency configuration include a first frequency value, and the first excitation signal is a monophonic signal whose frequency is the first frequency value. The one or more parameters in the second frequency configuration include a modulation order, a modulation symbol sequence, a modulation rate, and a frequency group including a plurality of frequency values, and the second excitation signal is an FSK signal corresponding to the modulation order, the modulation symbol sequence, the modulation rate, and the frequency group in the second frequency configuration.

In this implementation, the first active device may determine, based on that the first frequency configuration includes the first frequency value, that the first excitation signal is a monophonic signal whose frequency is the first frequency value. The second active device may determine, based on that the second frequency configuration includes the modulation order N, the modulation symbol sequence, the modulation rate, and the frequency group including the plurality of frequency values, that the second excitation signal is an FSK signal, and a waveform of the FSK signal is determined based on the parameter included in the second frequency configuration.

The modulation symbol sequence in the second frequency configuration may be an arbitrary digital sequence. When the modulation symbol sequence is not an N-ary digital sequence, the second active device may convert the modulation symbol sequence into an N-ary digital sequence. The following uses an example in which the modulation symbol sequence is an N-ary digital sequence for description. A length of the modulation symbol sequence is not limited. In other words, a quantity of modulation symbols included in the modulation symbol sequence is not limited. A quantity of the plurality of frequency values included in the frequency group in the second frequency configuration is equal to N, and the N different frequency values respectively correspond to modulation symbols 0, ..., and N-1. The modulation rate in the second frequency configuration is used to determine duration of a sine or cosine signal of a frequency value corresponding to each modulation symbol in the modulation symbol sequence. Duration of the FSK signal determined based on the second frequency configuration is determined based on the length of the modulation symbol sequence and the modulation rate, and the duration of the FSK signal may be less than, equal to, or greater than a length of the first time period. When the duration of the FSK signal is less than the length of the first time period, the second active device may repeatedly send the FSK signal in the first time period.

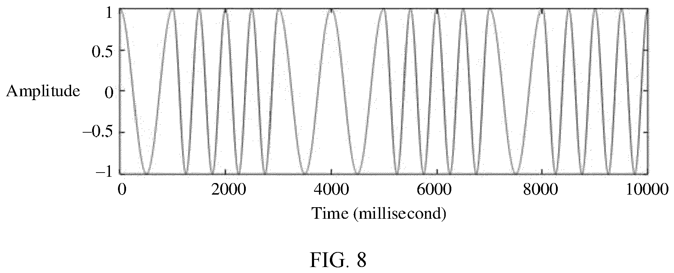

For example, when N=2, the modulation symbol sequence is 0110011011, the frequency group includes 1 Hz and 2 Hz that respectively correspond to modulation symbols 0 and 1, and the modulation rate is 1 symbol per second, that is, a monophonic signal of the frequency corresponding to each modulation symbol lasts for 1 second, the second active device may determine that the second excitation signal is an FSK signal shown in FIG. 8.

Based on this manner, the first active device sends the monophonic signal to the passive device, and the second active device simultaneously sends the FSK signal to the passive device. The FSK signal has a strong anti-interference capability, and when frequency selective fading occurs, this helps ensure the power of the signal received by the passive device, to improve the energy charging efficiency.

Optionally, the frequency group in the second frequency configuration does not include the first frequency value, so that the possibility of power cancellation between different excitation signals can be further reduced, to improve the efficiency of charging energy for the passive device to a greater extent.

**Manner 1.3:** The one or more parameters in the first frequency configuration include a modulation order, a modulation symbol sequence, a modulation rate, and a frequency group including a plurality of frequency values, and the first excitation signal is an FSK signal corresponding to the modulation order, the modulation symbol sequence, the modulation rate, and the frequency group in the first frequency configuration. The one or more parameters in the second frequency configuration include a modulation order, a modulation symbol sequence, a modulation rate, and a frequency group including a plurality of frequency values, and the second excitation signal is an FSK signal corresponding to the modulation order, the modulation symbol sequence, the modulation rate, and the frequency group in the second frequency configuration. The modulation order, the modulation symbol sequence, the modulation rate, or the frequency group in the first frequency configuration is different from the modulation order, the modulation symbol sequence, the modulation rate, or the frequency group in the second frequency configuration.

In this implementation, the first active device determines, based on the modulation order, the modulation symbol sequence, the modulation rate, and the frequency group in the first frequency configuration, that the first excitation signal is an FSK signal, and the second active device determines, based on the modulation order, the modulation symbol sequence, the modulation rate, and the frequency group in the second frequency configuration, that the second excitation signal is an FSK signal. Further, the modulation order, the modulation symbol sequence, the modulation rate, or the frequency group in the first frequency configuration is different from the modulation order, the modulation symbol sequence, the modulation rate, or the frequency group in the second frequency configuration.

That the modulation order, the modulation symbol sequence, the modulation rate, or the frequency group in the first frequency configuration is different from the modulation order, the modulation symbol sequence, the modulation rate, or the frequency group in the second frequency configuration may be one of the following cases (1) to (5).
(1) The modulation order in the first frequency configuration is different from the modulation order in the second frequency configuration.
(2) The modulation symbol sequence in the first frequency configuration is different from the modulation symbol sequence in the second frequency configuration.
(3) The modulation rate in the first frequency configuration is different from the modulation rate in the second frequency configuration.
(4) The frequency group in the first frequency configuration is different from the frequency group in the second frequency configuration. In other words, at least one of the plurality of frequency values included in the frequency group in the first frequency configuration is different from the plurality of frequency values included in the frequency group in the second frequency configuration.
(5) Any combination of the foregoing cases (1) to (4) is used.

The foregoing case (4) means that, in the plurality of frequency values included in the frequency group in the first frequency configuration, one frequency value may be different from the plurality of frequency values included in the frequency group in the second frequency configuration, or a plurality of frequency values are different from the plurality of frequency values included in the frequency group in the second frequency configuration. When more frequency values included in the frequency group in the first frequency configuration are different from the frequency values included the frequency group in the second frequency configuration, power of a signal received by the passive device from a plurality of devices is higher, and energy obtained by the passive device is higher.

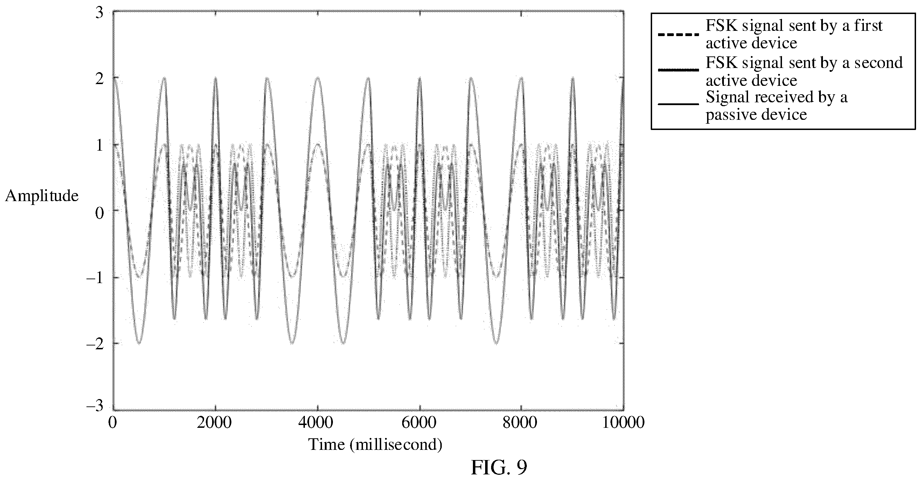

For example, in the first frequency configuration, the modulation order is 2, the modulation symbol sequence is 0110011011, the frequency group includes 1 Hz and 2 Hz that respectively correspond to modulation symbols 0 and 1, the modulation rate is 1 symbol per second, and in the second frequency configuration, the modulation order is 2, the modulation symbol sequence is 0110011011, the frequency group includes 1 Hz and 3 Hz that respectively correspond to modulation symbols 0 and 1, and the modulation rate is 1 symbol per second. In this case, the FSK signals respectively sent by the first active device and the second active device and a signal received by the passive device are shown in FIG. 9. The excitation signals sent by the two active devices are both FSK signals having a strong anti-interference capability, so that the power of the signal received by the passive device can be further ensured, to improve the energy charging efficiency.

(2) The first excitation signal is a constant envelope signal, and the second excitation signal is a non-constant envelope signal. The following Manners 1.4 and 1.5 are used as examples.

**Manner 1.4:** The one or more parameters in the first frequency configuration include a first frequency value, and the first excitation signal is a monophonic signal whose frequency is the first frequency value. The one or more parameters in the second frequency configuration include a plurality of frequency values, and the second excitation signal is a multi-tone signal corresponding to the plurality of frequency values in the second frequency configuration.

In this implementation, the first active device may determine, based on that the first frequency configuration includes the first frequency value, that the first excitation signal is a monophonic signal whose frequency is the first frequency value. The second active device may determine, based on the plurality of frequency values in the second frequency configuration, that the second excitation signal is the multi-tone signal corresponding to the plurality of frequency values in the second frequency configuration. In other words, the multi-tone signal is obtained by superimposing sine or cosine signals corresponding to the frequency values in the second frequency configuration.

Based on this manner, the first active device and the second active device respectively send the monophonic signal and the multi-tone signal to the passive device, so that a PAPR of the signal received by the passive device can be increased, and the efficiency of charging the passive device can be improved.

Optionally, the plurality of frequency values in the second frequency configuration are different from the first frequency value, so that the multi-tone signal sent by the second active device does not include a sine or cosine signal of the first frequency value. This can further increase energy obtained by the passive device from a plurality of signals, and improve the energy charging efficiency.

**Manner 1.5:** The one or more parameters in the first frequency configuration include a modulation order, a modulation symbol sequence, a modulation rate, and a frequency group including a plurality of frequency values, and the first excitation signal is an FSK signal corresponding to the modulation order, the modulation symbol sequence, the modulation rate, and the frequency group in the first frequency configuration. The one or more parameters in the second frequency configuration include a plurality of frequency values, and the second excitation signal is a multi-tone signal corresponding to the plurality of frequency values in the second frequency configuration.

In this implementation, the first active device may determine, based on the modulation order, the modulation symbol sequence, the modulation rate, and the frequency group in the first frequency configuration, that the first excitation signal is an FSK signal, and the second active device may determine the corresponding second excitation signal based on the plurality of frequency values in the second frequency configuration, in other words, the second excitation signal is a multi-tone signal obtained by superimposing sine or cosine signals corresponding to the plurality of frequency values. A possibility of power cancellation between the FSK signal and the multi-tone signal when the FSK signal and the multi-tone signal arrive at the passive device is smaller, so that the power of the signal received by the passive device can be further ensured, and the efficiency of charging energy for the passive device can be improved.

Optionally, at least one of the plurality of frequency values included in the frequency group in the first frequency configuration is different from the plurality of frequency values in the second frequency configuration. For example, in the plurality of frequency values included in the frequency group in the first frequency configuration, one frequency value is different from the plurality of frequency values in the second frequency configuration, or a plurality of frequency values are different from the plurality of frequency values in the second frequency configuration. When more frequency values in the plurality of frequency values included in the frequency group in the first frequency configuration are different from the plurality of frequency values in the second frequency configuration, energy obtained by the passive device from the FSK signal and the multi-tone signal is higher, and more efficient energy charging can be implemented.

(3) Both the first excitation signal and the second excitation signal are non-constant envelope signals. The following Manner 1.6 is used as an example.

**Manner 1.6:** The one or more parameters in the first frequency configuration include a plurality of frequency values, and the first excitation signal is a multi-tone signal corresponding to the plurality of frequency values in the first frequency configuration. The one or more parameters in the second frequency configuration include a plurality of frequency values, and the second excitation signal is a multi-tone signal corresponding to the plurality of frequency values in the second frequency configuration. At least one of the plurality of frequency values in the first frequency configuration is different from the plurality of frequency values in the second frequency configuration.

In this implementation, the first active device may determine that the first excitation signal is a multi-tone signal obtained by superimposing sine or cosine signals corresponding to the plurality of frequency values in the first frequency configuration, and the second active device may determine that the second excitation signal is a multi-tone signal obtained by superimposing sine or cosine signals corresponding to the plurality of frequency values in the second frequency configuration. The excitation signals sent by the two active devices are both multi-tone signals with high PAPRs. This can further improve a PAPR of a received signal on a passive device side, and help improve the energy charging efficiency.

In the plurality of frequency values in the first frequency configuration, one frequency value may be different from the plurality of frequency values in the second frequency configuration, or a plurality of frequency values may be different from the plurality of frequency values in the second frequency configuration. When more frequency values included in the first frequency configuration are different from the frequency values included in the second frequency configuration, energy obtained by the passive device from a plurality of multi-tone signals is higher.

Optionally, before the foregoing step S501, the method 500 further includes the following step S502.

S502: The at least two active devices receive a first indication message from a centralized control device, where the first indication message indicates the at least two active devices to send the excitation signals to the passive device in the first time period.

For example, in a scenario in which the at least two active devices include the first active device 101-1 and the second active device 101-2, step S502 includes the following steps S502a and S502b.

S502a: The first active device receives the first indication message from the centralized control device, where the first indication message indicates the first active device to send the excitation signal to the passive device in the first time period.

S502b: The second active device receives the first indication message from the centralized control device, where the first indication message indicates the second active device to send the excitation signal to the passive device in the first time period.

Optionally, the first indication message includes information indicating the first time period. A specific implementation includes the following Manners 2.1 and 2.2.

**Manner 2.1:** The information indicating the first time period includes a first time point and second time, where the first time period starts from the first time point after the at least two active devices receive the first indication message, and lasts for the second time. The at least two active devices start, based on the first time point and the second time in the first indication message, to send the excitation signals to the passive device from the first time point after receiving the first indication message, and the sending lasts for the second time and ends.

Units of the first time point and the second time may be microseconds, milliseconds, and seconds, or may be quantities of symbols, slots, subframes, and frames. The units of the first time point and the second time may be the same or may be different. This is not limited in this embodiment of this application.

It should be noted that the centralized control device may simultaneously send the first indication message to the at least two active devices, or may separately send the first indication message to the at least two active devices at different time points. The first time point and the second time in the first indication message received by each of the at least two active devices may remain the same or may vary. The centralized control device sends the first indication message in a plurality of manners, and values of the first time point and the second time are also set in a plurality of manners. The plurality of manners all fall within the protection scope of embodiments of this application provided that the at least two active devices can determine a same first time period based on a time point at which the first indication message is received and the first time point and the second time included in the first indication message.

For example, distances between the first active device 101-1 and a centralized control device 103 and between the second active device 101-2 and the centralized control device 103 are different. When the centralized control device simultaneously sends the first indication message to the first active device and the second active device, time points at which the first active device and the second active device receive the first indication message are different. In this case, the centralized control device may configure different first time points and/or second time for the first active device and the second active device, so that first time periods determined by the first active device and the second active device are the same, and the first active device and the second active device simultaneously send the excitation signals to the passive device. Alternatively, the centralized control device may separately send the first indication message to the first active device and the second active device at different time points, so that the first active device and the second active device simultaneously receive the first indication message, and then determine a same first time period based on a same first time point and same second time.

**Manner 2.2:** The information indicating the first time period includes a time domain resource position of the first time period, for example, a number of a time domain resource. The time domain resource may be a symbol, a slot, a subframe, a frame, or the like. For example, if the first time period is slots #0 to #4, the at least two active devices determine that 1^{st} slots #0 to #4 after the first indication message is received are the first time period.

Optionally, before the foregoing step S501, the method 500 further includes the following step S503.

S503: The at least two active devices receive a second indication message from the centralized control device, where the second indication message includes one or more parameters in a frequency configuration corresponding to the excitation signal.

For example, in the scenario in which the at least two active devices include the first active device 101-1 and the second active device 101-2, step S503 includes the following steps S503a and S503b.

S503a: The first active device receives a second indication message from the centralized control device, where the second indication message includes one or more parameters in the first frequency configuration corresponding to the first excitation signal.

S503b: The second active device receives a second indication message from the centralized control device, where the second indication message includes one or more parameters in the second frequency configuration corresponding to the second excitation signal.

Optionally, that the second indication message includes one or more parameters in a frequency configuration corresponding to the excitation signal is specifically that the second indication message includes an index value corresponding to the one or more parameters in the frequency configuration. In this implementation, the active device and the centralized control device store a frequency configuration table, and the table includes all possible values and corresponding index values of the one or more parameters in the frequency configuration. Table 1 shows an example of the frequency configuration table. For example, the frequency configuration table may be sent by the centralized control device to the active device, may be configured by another network device for the centralized control device and the active device, or may be information that is already stored in the active device before step S503 is performed. This is not limited in this embodiment of this application. The at least two active devices obtain an index value from the second indication message, search the frequency configuration table based on the index value, and determine one or more parameters in the frequency configuration corresponding to the excitation signal. Based on this manner, the active device may determine the parameter in the frequency configuration based on the index value in the second indication message, so that signaling overheads are reduced.

**Table 1 Example of a frequency configuration table**

| **Index value** | **Frequency configuration** |
|---|---|
| 1 | A frequency is 1 Hz |
| 2 | A frequency is 2 Hz |
| 3 | Modulation order: 2 |
| | Modulation symbol sequence: 0100110101 |
| | Modulation rate: 1 symbol per second |
| | Data 0 corresponds to the frequency 1 Hz, and data 1 corresponds to the frequency 2 Hz |

Optionally, step S503 and step S502 are different steps, and the second indication message and the first indication message in step S502 are different messages. In other words, the centralized control device separately indicates, by using different indication messages, the time in which the at least two active devices send the excitation signals and the frequency configurations corresponding to the excitation signals. Based on this manner, the centralized control device may send one or more of the first indication message and the second indication message based on a requirement. For example, when a frequency configuration is fixed, the centralized control device may reduce a quantity of times of sending the second indication message, to reduce the signaling overheads.

Optionally, step S503 and step S502 are a same step, and the second indication message and the first indication message in step S502 are a same message. In other words, the centralized control device indicates, by using a same indication message, the time in which the excitation signal is sent and the frequency configuration corresponding to the excitation signal, so that information transfer efficiency of the centralized control device can be improved.

Optionally, the one or more parameters in the frequency configuration corresponding to the excitation signal may be included in the second indication message, and another parameter may be included in the first indication message. For example, the frequency configuration includes a modulation order, a modulation symbol sequence, a modulation rate, and a frequency group, the second indication message includes the modulation order and the modulation rate in the frequency configuration, and the first indication message includes the modulation symbol sequence and the frequency group.

Specifically, the centralized control device may send the second indication message to the at least two active devices in, but not limited to, the following Manners 3.1 to 3.3.

**Manner 3.1:** The centralized control device simultaneously sends the second indication message to the at least two active devices. For example, the centralized control device may broadcast the second indication message to the at least two active devices, where the second indication message includes the frequency configurations corresponding to the excitation signals sent by the at least two active devices. Optionally, the second indication message further includes identification information of the at least two active devices, and each piece of identification information corresponds to one frequency configuration. In other words, the identification information indicates an active device to which a corresponding frequency configuration is available. For example, the identification information may be identity information of the active device.

Correspondingly, after receiving the broadcast second indication message, the active device searches the second indication message for the identification information of the active device. If the identification information of the active device exists in the second indication message, the active device determines, based on the frequency configuration corresponding to the identification information, the excitation signal to be sent to the passive device. If the identification information of the active device does not exist in the second indication message, the active device ignores the second indication message.

Based on this manner, the centralized control device may send frequency configurations of different active devices to a plurality of active devices by using one indication message, and each active device may determine an available frequency configuration of the active device based on a correspondence between identification information in the indication message and a frequency configuration, to improve the information transfer efficiency of the centralized control device.

**Manner 3.2:** The centralized control device separately sends the second indication message to each active device through a dedicated channel between the centralized control device and each of the at least two active devices.

Correspondingly, if the active device receives the second indication message from the dedicated channel, the active device determines, based on a frequency configuration included in the second indication message, the excitation signal to be sent to the passive device. In this way, transmission reliability of the second indication message can be improved, complexity of processing the second indication message by the active device can be reduced, and a processing delay can be reduced.

**Manner 3.3:** The centralized control device sends the second indication message to each of the at least two active devices through a common channel, where the second indication message includes identification information, and indicates an active device to which the second indication message is sent, that is, an active device to which a frequency configuration in the second indication message is available.

For example, the identification information may be identity information of the active device. Optionally, the centralized control device may add the identification information to an information element (information element, IE) of the second indication message, or may scramble the second indication message by using the identification information, to improve message transmission security. For example, the identification information is a radio network temporary identifier (radio network temporary identifier, RNTI) of the active device, and the centralized control device scrambles the second indication message by using the RNTI.

Correspondingly, the active device receives the second indication message. If the second indication message includes the identification information of the active device, for example, the IE of the second indication message includes the identification information of the active device, or the active device can correctly descramble the second indication message by using the identification information of the active device, the active device can determine that the frequency configuration in the second indication message is available to the active device, and further determine, based on the frequency configuration, the excitation signal to be sent to the passive device.

It should be noted that the communication system 100 may further include more than two active devices. To be specific, in addition to the first active device 101-1 and the second active device 101-2, at least one active device sends an excitation signal to a passive device 102 in the first time period. Optionally, a frequency configuration corresponding to the excitation signal sent by the at least one active device may be the same as the first frequency configuration or the second frequency configuration, or may be different from both the first frequency configuration and the second frequency configuration. This is not limited in this embodiment of this application. Based on this manner, more active devices simultaneously send excitation signals to the passive device, so that more energy can be provided for the passive device, and the efficiency of charging energy for the passive device is further improved.

Optionally, after the foregoing energy charging is completed, the passive device may further exchange data with the first active device, the second active device, or another active device in the system. The following uses data exchange between the passive device and the first active device in the integrated architecture as an example for description.

Optionally, after step S501, the method 500 further includes the following step S504.

S504: The first active device sends a downlink signal on which data is modulated to the passive device.

Correspondingly, the passive device receives the downlink signal from the first active device, and demodulates the downlink signal to obtain the data transmitted by the first active device.

The data transmitted by the first active device may be generated by the first active device, or may be forwarded by the centralized control device to the passive device through the first active device.

Optionally, after step S501, the method 500 further includes the following steps S505 to S507 (not shown in the figure).

S505: The first active device sends a carrier signal to the passive device, where the carrier signal is used to carry data sent by the passive device.

S506: The passive device backscatters the carrier signal on which the data is modulated to the first active device.

S507: The first active device receives the backscattered signal from the passive device to obtain the data transmitted by the passive device.

Optionally, the data transmitted by the passive device may be sent to the centralized control device. In this case, after obtaining the data transmitted by the passive device, the first active device further forwards the data to the centralized control device.

Similarly, in the separated architecture, the first active device serves as a helper to send a carrier signal to the passive device, and the passive device backscatters the carrier signal on which data is modulated to another active device serving as a receiver, to implement uplink data transmission.

Based on the method, the passive device may exchange data with the active device and/or the centralized control device.

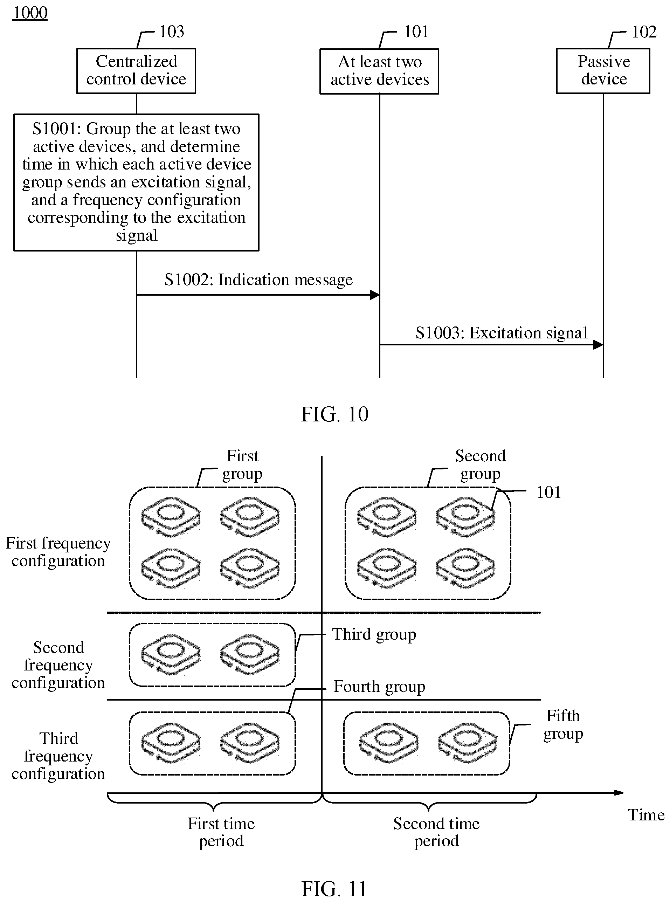

FIG. 10 is a schematic flowchart of another communication method 1000 according to an embodiment of this application. The method may be applied to the foregoing communication system 100. The following describes the method 1000 in detail by using an integrated architecture as an example. Similarly, the method is also applicable to a separated architecture. For example, an active device in the following descriptions is equivalent to a helper in the separated architecture. As shown in FIG. 10, the method includes the following plurality of steps.

S1001: A centralized control device groups at least two active devices, and determines time in which each active device group sends an excitation signal, and a frequency configuration corresponding to the excitation signal.

Quantities of active devices in different active device groups may be the same or may be different.

Specifically, the centralized control device determines, based on the following Conditions 1.1 to 1.3, the time in which each active device group sends the excitation signal, and the frequency configuration corresponding to the excitation signal.

**Condition 1.1:** Active devices in a same active device group send excitation signals to a passive device in a same time period based on a same frequency configuration.

**Condition 1.2:** Different active device groups send excitation signals in different time periods, have different frequency configurations, or send excitation signals in different time periods and have different frequency configurations. That different active device groups send excitation signals in different time periods includes: The time periods in which different active device groups send the excitation signals do not completely overlap.

For specific implementations of different frequency configurations, refer to the foregoing Manners 1.1 to 1.6.

**Condition 1.3:** At least two active device groups send excitation signals in a same time period.

FIG. 11 is a diagram of grouping at least two active devices by a centralized control device. The centralized control device groups 18 active devices into five groups. A first group and a second group each include four active devices, and a third group, a fourth group, and a fifth group each include two active devices. The first group, the third group, and the fourth group send excitation signals in a first time period, and frequency configurations are respectively a first frequency configuration, a second frequency configuration, and a third frequency configuration. The second group and the fifth group send excitation signals in a second time period, and frequency configurations are respectively the first frequency configuration and the third frequency configuration.

S1002: The centralized control device sends one or more indication messages to one or more active devices in each active device group, to indicate a time period in which the group of active devices sends the excitation signal, and a frequency configuration.

S1003: The active device sends the excitation signal to the passive device based on the time period and the frequency configuration that are learned of, to charge energy for the passive device.

In step S1002, for the one or more indication messages indicating the time period in which the group of active devices sends the excitation signal, and the frequency configuration, refer to the first indication message and the second indication message in the method 500. Details are not described herein again.

The following describes in detail possible implementations of steps S1002 and S1003 by using an example in which the centralized control device sends an indication message to the first active device group and the first active device group sends the excitation signals to the passive device. Optionally, the foregoing steps S1002 and S1003 may use but are not limited to one of the following Manners 4.1 to 4.3.

**Manner 4.1:** In the foregoing step S1002, the centralized control device broadcasts the indication message to all the active devices in the first active device group. The indication message includes identification information of the first active device group, a time period in which the first active device group sends the excitation signals, and a frequency configuration. In this implementation, before sending the indication message, the centralized control device further sends the identification information of the first active device group to the active device in the first active device group.

Correspondingly, in step S1003, the active device in the first active device group receives the indication message. When the indication message includes the identification information of the first active device group, the active device sends the excitation signal to the passive device based on the time period and the frequency configuration in the indication message. When the indication message does not include the identification information of the first active device group, the active device ignores the indication message.

Based on this manner, the centralized control device notifies, by broadcasting the indication message, all the active devices in one group of the time period in which the excitation signal is sent and the frequency configuration, so that signaling overheads can be reduced.

**Manner 4.2:** In the foregoing step S1002, the centralized control device separately sends the indication message to each active device in the first active device group. For a specific implementation, refer to the foregoing Manners 3.2 and 3.3.

Correspondingly, in step S1003, the active device receives the indication message. When the active device determines that a time period and a frequency configuration in the indication message are available to the active device, the active device sends the excitation signal to the passive device based on the time period and the frequency configuration; or when the active device determines that a time period and a frequency configuration in the indication message are not available to the active device, the active device ignores the indication message.

**Manner 4.3:** In the foregoing step S1002, the centralized control device may select at least one active device from the first active device group as a primary active device, and the centralized control device sends the indication message to the primary active device, where the indication message includes a time period in which the first active device group sends the excitation signal, and a frequency configuration. Optionally, the indication message further includes an identification signal of the first active device group, or the indication message includes identification information of the primary active device.

Optionally, the indication message may further include second information, and the second information indicates the primary active device to notify another active device in the first active device group of the time period and the frequency configuration included in the indication message. A manner in which the primary active device learns of another active device in the first active device group is not limited in this embodiment of this application. For example, the centralized control device may include identity information of another active device in the first active device group in the indication message. For another example, before sending the indication message, the centralized control device may send identity information of another active device in the first active device group to the primary active device.

Correspondingly, in step S1003, the primary active device receives the indication message from the centralized control device, determines, based on the identification signal of the first active device group or the identification information of the primary active device in the indication message, that the time period and the frequency configuration in the indication message are available to the active device group in which the primary active device is located, and notifies another active device in the first active device group of the time period and the frequency configuration. If the indication message does not include the identification signal of the first active device group and the identification information of the primary active device, the primary active device ignores the indication message. Then, the active device sends the excitation signal based on the time period and the frequency configuration that are learned of from the indication message or learned of from the primary active device.

For example, the primary active device may send the time period and frequency configuration to another active device in the first active device group by using a 5G SL technology.

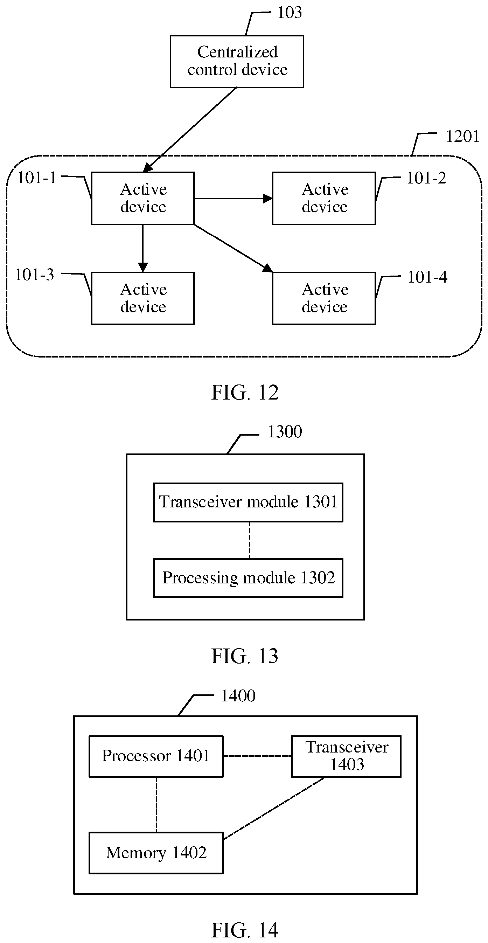

FIG. 12 is a diagram of implementing steps S1002 and S1003 in Manner 4.3. As shown in FIG. 12, a first active device group 1201 includes active devices: a first active device 101-1, a second active device 101-2, an active device 101-3, and an active device 101-4. The centralized control device uses the first active device 101-1 as a primary active device in the first active device group, and sends an indication message to the first active device 101-1. The indication message includes identity information of the second active device 101-2, the active device 101-3, and the active device 101-4, identification information of the first active device group 1201, the second information, a time period in which an excitation signal is sent, and a corresponding frequency configuration. The first active device 101-1 determines, based on the identification information of the first active device group in the indication message, that the time period and the frequency configuration in the indication message are available to the first active device group, and then sends, based on the second information, the time period in which the excitation signal is sent and the frequency configuration to the second active device 101-2, the active device 101-3, and the active device 101-4.

Based on the foregoing method, the centralized control device may plan grouping of a plurality of active devices in a centralized manner, and control time periods in which different active device groups send excitation signals, and frequency configurations, to provide more efficient energy charging for the passive device.

The communication system and the communication method provided in embodiments of this application are described in detail above with reference to FIG. 1 to FIG. 12. It may be understood that, to implement the foregoing functions, each device needs to include a corresponding hardware structure and/or software module for performing each function.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in this application with reference to FIG. 13 to FIG. 15. It should be understood that descriptions of apparatus embodiments correspond to the descriptions of method embodiments. Therefore, for content that is not described in detail, refer to the foregoing method embodiments. For brevity, some content is not described again.

In embodiments of this application, functional modules of the device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which each functional module is obtained through division based on each corresponding function is used below for description.

FIG. 13 is a block diagram of a communication apparatus 1300 according to an embodiment of this application. The apparatus 1300 includes a transceiver module 1301 and a processing module 1302. The transceiver module 1301 may implement a corresponding communication function, and the processing module 1302 is configured to perform data processing. In other words, the transceiver module 1301 is configured to perform an operation related to receiving and sending, and the processing module 1302 is configured to perform an operation other than receiving and sending. The transceiver module 1301 may also be referred to as a communication interface or a communication unit.

In a design, the apparatus 1300 may correspond to the active device in the foregoing method embodiments, or may be a component (for example, a chip) of the active device.

The apparatus 1300 may implement a step or a procedure performed by the active device in the foregoing method embodiments. The transceiver module 1301 may be configured to perform an operation related to receiving and sending of the active device in the foregoing method embodiments. The processing module 1302 may be configured to perform an operation related to internal processing of the active device in the foregoing method embodiments.

In a possible implementation, the transceiver module 1301 is configured to send an excitation signal to a passive device in a first time period, where the excitation signal is used to charge energy for the passive device. The processing module 1302 is configured to determine, based on a frequency value in a frequency configuration, that the excitation signal is a monophonic signal of the frequency value. The processing module 1302 is further configured to determine, based on a modulation order, a modulation symbol sequence, a modulation rate, and a frequency group including a plurality of frequency values in the frequency configuration, that the excitation signal is an FSK signal corresponding to the modulation order, the modulation symbol sequence, the modulation rate, and the frequency group in the frequency configuration. The processing module 1302 is further configured to determine, based on a plurality of frequency values included in the frequency configuration, that the excitation signal is a multi-tone signal, where the multi-tone signal is obtained by superimposing sine or cosine signals corresponding to the frequency values in the frequency configuration.

Optionally, the transceiver module 1301 is further configured to receive a first indication message from a centralized control device, where the first indication message indicates the active device to send the excitation signal to the passive device in the first time period. Correspondingly, the processing module 1302 is further configured to determine the first time period based on the first indication message.

Optionally, the transceiver module 1301 is further configured to receive a second indication message from the centralized control device, where the second indication message includes a frequency configuration corresponding to the excitation signal. The processing module 1302 is further configured to determine, based on identification information included in the second indication message, whether the frequency configuration in the second indication message is a frequency configuration available to the processing module 1302.

When the apparatus 1300 is configured to perform the method in FIG. 5, the transceiver module 1301 may be configured to perform steps of receiving and sending information in the method, for example, steps S501, S502, S503, and S504, and the processing module 1302 may be configured to perform internal processing steps in the method.

When the apparatus 1300 is configured to perform the method in FIG. 10, the transceiver module 1301 may be configured to perform steps of receiving and sending information in the method, for example, steps S1002 and S1003, and the processing module 1302 may be configured to perform internal processing steps in the method.

It should be understood that, for a specific process of performing the foregoing steps by each unit, refer to the descriptions of the foregoing embodiments. Details are not described herein again.

In a design, the apparatus 1300 may correspond to the passive device in the foregoing method embodiments, or may be a component (for example, a chip) of the passive device.

The apparatus 1300 may implement a step or a procedure performed by the passive device in the foregoing method embodiments. The transceiver module 1301 may be configured to perform an operation related to receiving and sending of the passive device in the foregoing method embodiments, for example, configured to receive an excitation signal from an active device. The processing module 1302 may be configured to perform an operation related to internal processing of the passive device in the foregoing method embodiments.

When the apparatus 1300 is configured to perform the method in FIG. 5, the transceiver module 1301 may be configured to perform steps of receiving and sending information in the method, for example, step S501, and the processing module 1302 may be configured to perform internal processing steps in the method.

When the apparatus 1300 is configured to perform the method in FIG. 10, the transceiver module 1301 may be configured to perform steps of receiving and sending information in the method, for example, step S1003, and the processing module 1302 may be configured to perform internal processing steps in the method.

It should be understood that a specific process in which each unit performs the foregoing corresponding steps is described in detail in the foregoing method embodiments. For brevity, details are not described herein again.

In a design, the apparatus 1300 may correspond to the centralized control device in the foregoing method embodiments, or may be a component (for example, a chip) of the centralized control device.

The apparatus 1300 may implement a step or a procedure performed by the centralized control device in the foregoing method embodiments. The transceiver module 1301 may be configured to perform an operation related to receiving and sending of the centralized control device in the foregoing method embodiments. The processing module 1302 may be configured to perform an operation related to internal processing of the centralized control device in the foregoing method embodiments.

In a possible implementation, the transceiver module 1301 is configured to send a first indication message to at least two active devices, where the first indication message indicates the at least two active devices to send an excitation signal to a passive device in a first time period. The transceiver module 1301 is further configured to send a second indication message to the at least two active devices, where the second indication message includes a frequency configuration corresponding to the excitation signal. The processing module 1302 is configured to include identification information in the second indication message, where the identification information indicates an active device for which the frequency configuration is used.

In another possible implementation, the processing module 1302 is configured to: group at least two active devices, and determine time in which each active device group sends an excitation signal, and a frequency configuration corresponding to the excitation signal. The transceiver module 1301 is configured to send one or more indication messages to one or more active devices in each group of active devices, to indicate a time period in which the group of active devices sends the excitation signal and the frequency configuration.

When the apparatus 1300 is configured to perform the method in FIG. 5, the transceiver module 1301 may be configured to perform steps of receiving and sending information in the method, for example, steps S502 and S503, and the processing module 1302 may be configured to perform internal processing steps in the method.

When the apparatus 1300 is configured to perform the method in FIG. 10, the transceiver module 1301 may be configured to perform steps of receiving and sending information in the method, for example, step S1002, and the processing module 1302 may be configured to perform internal processing steps in the method, for example, step S1001.

It should be understood that a specific process in which each unit performs the foregoing corresponding steps is described in detail in the foregoing method embodiments. For brevity, details are not described herein again.

It should be further understood that the apparatus 1300 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another suitable component that supports the described functions. In an optional example, the transceiver module 1301 may alternatively be a transceiver circuit (for example, may include a receiver circuit and a transmitter circuit), and the processing module 1302 may be a processing circuit.

The apparatus 1300 in the foregoing solutions has a function of implementing corresponding steps performed by the devices (for example, the active device, the passive device, and the centralized control device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in method embodiments.

FIG. 14 is a diagram of another communication apparatus 1400 according to an embodiment of this application. The apparatus 1400 includes one or more processors 1401, and the processor 1401 is configured to: execute a computer program or instructions stored in a memory 1402, or read data/signaling stored in a memory 1402, to perform the methods in the foregoing method embodiments.

Optionally, as shown in FIG. 14, the apparatus 1400 further includes one or more memories 1402. The memory 1402 is configured to store a computer program or instructions and/or data. The memory 1402 may be integrated with the processor 1401, or may be disposed separately.

Optionally, as shown in FIG. 14, the apparatus 1400 further includes a transceiver 1403. The transceiver 1403 is configured to receive a signal and/or send a signal. For example, the processor 1401 is configured to control the transceiver 1403 to receive a signal and/or send a signal.

In a solution, the apparatus 1400 is configured to implement operations performed by the active device in the foregoing method embodiments.

In another solution, the apparatus 1400 is configured to implement operations performed by the passive device in the foregoing method embodiments.

In still another solution, the apparatus 1400 is configured to implement operations performed by the centralized control device in the foregoing method embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be further understood that the memory in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware assembly, the memory (storage module) may be integrated in the processor. It should be further noted that the memory described in this specification is intended to include, but is not limited to, these memories and any other appropriate type of memory.

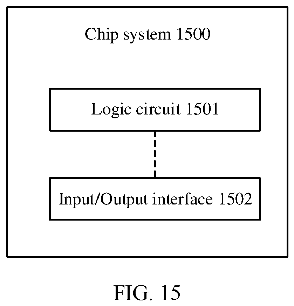

FIG. 15 is a diagram of a chip system 1500 according to an embodiment of this application. The chip system 1500 (or may be referred to as a processing system) includes a logic circuit 1501 and an input/output interface (input/output interface) 1502.

The logic circuit 1501 may be a processing circuit in the chip system 1500. The logic circuit 1501 may be coupled and connected to a storage unit, and invoke instructions in the storage unit, to enable the chip system 1500 to implement the methods and functions in embodiments of this application. The input/output interface 1502 may be an input/output circuit in the chip system 1500, and outputs information processed by the chip system 1500, or inputs to-be-processed data or signaling information to the chip system 1500 for processing.

In a solution, the chip system 1500 is configured to implement operations performed by the active device, the passive device, and the centralized control device in the foregoing method embodiments. For example, the logic circuit 1501 is configured to implement an operation related to internal processing performed by the active device, the passive device, or the centralized control device in the foregoing method embodiments. The input/output interface 1502 is configured to implement operations related to sending and/or receiving performed by the active device, the passive device, or the centralized control device in the foregoing method embodiments.

For explanations and beneficial effects of related content in any one of the foregoing provided apparatuses, refer to the corresponding method embodiment provided above. Details are not described herein again.

In several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

An embodiment of this application further provides a computer-readable storage medium. The computer-readable storage medium stores computer instructions for implementing the methods performed by the active device, the passive device, or the centralized control device in the foregoing method embodiments. For example, when a computer program is executed by a computer, the computer is enabled to implement the methods performed by the active device, the passive device, or the centralized control device in the foregoing method embodiments.

All or a part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the foregoing usable medium includes but is not limited to any medium that can store program code, such as a USB flash drive, a removable hard disk, a ROM, a RAM, a magnetic disk, or an optical disc.

For ease of understanding embodiments of this application, the following descriptions are provided.

First, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between the associated objects.

Third, in embodiments of this application, "first", "second", and various numerical numbers (for example, #1 and #2) indicate differentiation for ease of description, and are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in embodiments of this application, descriptions such as "when...", "in a case of...", and "if" all mean that a device performs corresponding processing in an objective case, and are not intended to limit time. The descriptions do not necessarily mean that the device performs a determining action during implementation, and do not mean any other limitation.

Fifth, in embodiments of this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in embodiments of this application, "indicate" may include "directly indicate" and "indirectly indicate". When a piece of indication information indicates A, the indication information may directly indicate A or indirectly indicate A, but it does not indicate that the indication information definitely carries A.

An indication manner in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in embodiments of this application, "storage" may mean storage in one or more memories. The one or more memories may be separately disposed, or may be integrated in an encoder, a decoder, a processor, or a communication apparatus. Alternatively, a part of the one or more memories may be separately disposed, and a part of the one or more memories are integrated in a decoder, a processor, or a communication apparatus. A type of the memory may be a storage medium in any form. This is not limited in this application.

Eighth, in embodiments of this application, "communication" may also be described as "data transmission", "information transmission", "data processing", or the like. "Transmission" includes "sending" and/or "receiving", and "data" may include user data and/or control signaling. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by at least two active devices, excitation signals to a passive device in a first time period, wherein the at least two active devices comprise a first active device and a second active device, and the excitation signals are used to charge energy for the passive device; and
the sending, by at least two active devices, excitation signals to a passive device in a first time period comprises:
sending, by the first active device, a first excitation signal to the passive device in the first time period; and
sending, by the second active device, a second excitation signal to the passive device in the first time period, wherein
a first frequency configuration corresponding to the first excitation signal is different from a second frequency configuration corresponding to the second excitation signal.

2. The method according to claim 1, wherein that a first frequency configuration corresponding to the first excitation signal is different from a second frequency configuration corresponding to the second excitation signal comprises:
one or more parameters in the first frequency configuration are different from one or more parameters in the second frequency configuration.

3. The method according to claim 2, wherein the one or more parameters in the first frequency configuration comprise a first frequency value, and the first excitation signal is a monophonic signal whose frequency is the first frequency value;
the one or more parameters in the second frequency configuration comprise a second frequency value, and the second excitation signal is a monophonic signal whose frequency is the second frequency value; and
the first frequency value is different from the second frequency value.

4. The method according to claim 2, wherein the one or more parameters in the first frequency configuration comprise a first frequency value, and the first excitation signal is a monophonic signal whose frequency is the first frequency value; and
the one or more parameters in the second frequency configuration comprise a modulation order, a modulation symbol sequence, a modulation rate, and a frequency group comprising a plurality of frequency values, and the second excitation signal is a frequency shift keying FSK signal corresponding to the modulation order, the modulation symbol sequence, the modulation rate, and the frequency group in the second frequency configuration.

5. The method according to claim 4, wherein the frequency group comprising the plurality of frequency values does not comprise the first frequency value.

6. The method according to claim 2, wherein the one or more parameters in the first frequency configuration comprise a modulation order, a modulation symbol sequence, a modulation rate, and a frequency group comprising a plurality of frequency values, and the first excitation signal is a frequency shift keying FSK signal corresponding to the modulation order, the modulation symbol sequence, the modulation rate, and the frequency group in the first frequency configuration;
the one or more parameters in the second frequency configuration comprise a modulation order, a modulation symbol sequence, a modulation rate, and a frequency group comprising a plurality of frequency values, and the second excitation signal is an FSK signal corresponding to the modulation order, the modulation symbol sequence, the modulation rate, and the frequency group in the second frequency configuration; and
the modulation order, the modulation symbol sequence, the modulation rate, or the frequency group in the first frequency configuration is different from the modulation order, the modulation symbol sequence, the modulation rate, or the frequency group in the second frequency configuration.

7. The method according to claim 6, wherein that the frequency group in the first frequency configuration is different from the frequency group in the second frequency configuration comprises:
at least one of the plurality of frequency values comprised in the frequency group in the first frequency configuration is different from the plurality of frequency values comprised in the frequency group in the second frequency configuration.

8. The method according to claim 2, wherein the one or more parameters in the first frequency configuration comprise a first frequency value, and the first excitation signal is a monophonic signal whose frequency is the first frequency value; and
the one or more parameters in the second frequency configuration comprise a plurality of frequency values, and the second excitation signal is a multi-tone signal corresponding to the plurality of frequency values in the second frequency configuration.

9. The method according to claim 8, wherein the plurality of frequency values in the second frequency configuration are different from the first frequency value.

10. The method according to claim 2, wherein the one or more parameters in the first frequency configuration comprise a modulation order, a modulation symbol sequence, a modulation rate, and a frequency group comprising a plurality of frequency values, and the first excitation signal is a frequency shift keying FSK signal corresponding to the modulation order, the modulation symbol sequence, the modulation rate, and the frequency group in the first frequency configuration; and
the one or more parameters in the second frequency configuration comprise a plurality of frequency values, and the second excitation signal is a multi-tone signal corresponding to the plurality of frequency values in the second frequency configuration.

11. The method according to claim 10, wherein at least one of the plurality of frequency values comprised in the frequency group in the first frequency configuration is different from the plurality of frequency values in the second frequency configuration.

12. The method according to claim 2, wherein the one or more parameters in the first frequency configuration comprise a plurality of frequency values, and the first excitation signal is a multi-tone signal corresponding to the plurality of frequency values in the first frequency configuration;
the one or more parameters in the second frequency configuration comprise a plurality of frequency values, and the second excitation signal is a multi-tone signal corresponding to the plurality of frequency values in the second frequency configuration; and
at least one of the plurality of frequency values in the first frequency configuration is different from the plurality of frequency values in the second frequency configuration.

13. The method according to any one of claims 1 to 12, wherein before the sending, by at least two active devices, excitation signals to a passive device in a first time period, the method further comprises:
receiving, by the at least two active devices, a first indication message from a centralized control device, wherein the first indication message indicates the at least two active devices to send the excitation signals to the passive device in the first time period.

14. The method according to any one of claims 1 to 13, wherein before the sending, by at least two active devices, excitation signals to a passive device in a first time period, the method further comprises:
receiving, by the at least two active devices, a second indication message from the centralized control device, wherein the second indication message comprises a frequency configuration corresponding to the excitation signal.

15. The method according to claim 14, wherein the second indication message further comprises identification information, and the identification information indicates an active device for which the frequency configuration is used.

16. A communication system, comprising a first active device and a second active device, wherein
the first active device is configured to send, to a passive device in a first time period, a first excitation signal used to charge energy for the passive device; and
the second active device is configured to send, to the passive device in the first time period, a second excitation signal used to charge energy for the passive device, wherein
a first frequency configuration corresponding to the first excitation signal is different from a second frequency configuration corresponding to the second excitation signal.

17. The system according to claim 16, further comprising the passive device, configured to receive the first excitation signal and the second excitation signal.

18. The system according to claim 16 or 17, wherein that a first frequency configuration corresponding to the first excitation signal is different from a second frequency configuration corresponding to the second excitation signal comprises:
one or more parameters in the first frequency configuration are different from one or more parameters in the second frequency configuration.

19. The system according to claim 18, wherein the one or more parameters in the first frequency configuration comprise a first frequency value, and the first excitation signal is a monophonic signal whose frequency is the first frequency value;
the one or more parameters in the second frequency configuration comprise a second frequency value, and the second excitation signal is a monophonic signal whose frequency is the second frequency value; and
the first frequency value is different from the second frequency value.

20. The system according to claim 18, wherein the one or more parameters in the first frequency configuration comprise a first frequency value, and the first excitation signal is a monophonic signal whose frequency is the first frequency value; and
the one or more parameters in the second frequency configuration comprise a modulation order, a modulation symbol sequence, a modulation rate, and a frequency group comprising a plurality of frequency values, and the second excitation signal is a frequency shift keying FSK signal corresponding to the modulation order, the modulation symbol sequence, the modulation rate, and the frequency group in the second frequency configuration.

21. The system according to claim 20, wherein the frequency group comprising the plurality of frequency values does not comprise the first frequency value.

22. The system according to claim 18, wherein the one or more parameters in the first frequency configuration comprise a modulation order, a modulation symbol sequence, a modulation rate, and a frequency group comprising a plurality of frequency values, and the first excitation signal is a frequency shift keying FSK signal corresponding to the modulation order, the modulation symbol sequence, the modulation rate, and the frequency group in the first frequency configuration;
the one or more parameters in the second frequency configuration comprise a modulation order, a modulation symbol sequence, a modulation rate, and a frequency group comprising a plurality of frequency values, and the second excitation signal is an FSK signal corresponding to the modulation order, the modulation symbol sequence, the modulation rate, and the frequency group in the second frequency configuration; and
the modulation order, the modulation symbol sequence, the modulation rate, or the frequency group in the first frequency configuration is different from the modulation order, the modulation symbol sequence, the modulation rate, or the frequency group in the second frequency configuration.

23. The system according to claim 22, wherein that the frequency group in the first frequency configuration is different from the frequency group in the second frequency configuration comprises:
at least one of the plurality of frequency values comprised in the frequency group in the first frequency configuration is different from the plurality of frequency values comprised in the frequency group in the second frequency configuration.

24. The system according to claim 18, wherein the one or more parameters in the first frequency configuration comprise a first frequency value, and the first excitation signal is a monophonic signal whose frequency is the first frequency value; and
the one or more parameters in the second frequency configuration comprise a plurality of frequency values, and the second excitation signal is a multi-tone signal corresponding to the plurality of frequency values in the second frequency configuration.

25. The system according to claim 24, wherein the plurality of frequency values in the second frequency configuration are different from the first frequency value.

26. The system according to claim 18, wherein the one or more parameters in the first frequency configuration comprise a modulation order, a modulation symbol sequence, a modulation rate, and a frequency group comprising a plurality of frequency values, and the first excitation signal is a frequency shift keying FSK signal corresponding to the modulation order, the modulation symbol sequence, the modulation rate, and the frequency group in the first frequency configuration; and
the one or more parameters in the second frequency configuration comprise a plurality of frequency values, and the second excitation signal is a multi-tone signal corresponding to the plurality of frequency values in the second frequency configuration.

27. The system according to claim 26, wherein at least one of the plurality of frequency values comprised in the frequency group in the first frequency configuration is different from the plurality of frequency values in the second frequency configuration.

28. The system according to claim 18, wherein the one or more parameters in the first frequency configuration comprise a plurality of frequency values, and the first excitation signal is a multi-tone signal corresponding to the plurality of frequency values in the first frequency configuration;
the one or more parameters in the second frequency configuration comprise a plurality of frequency values, and the second excitation signal is a multi-tone signal corresponding to the plurality of frequency values in the second frequency configuration; and
at least one of the plurality of frequency values in the first frequency configuration is different from the plurality of frequency values in the second frequency configuration.

29. The system according to any one of claims 16 to 28, wherein the first active device and the second active device are further configured to receive one or more of the following:
a first indication message, wherein the first indication message indicates the first active device and the second active device to send the excitation signals to the passive device in the first time period; and
a second indication message, wherein the second indication message comprises the frequency configurations corresponding to the excitation signals.

30. The system according to claim 29, wherein the system further comprises a centralized control device, wherein
the centralized control device is configured to send the first indication message or the second indication message to the first active device and the second active device.
